# EUROPEAN PATENT SPECIFICATION

(11) **EP 3 412 719 B1**
(45) Date of publication and mention of the grant of the patent: **02.10.2019**
(21) Application number: 18153483.5
(22) Date of filing: 25.01.2018
(51) Int. Cl.: B60C 15/06, C08K 7/06, C08L 7/00, C08L 21/00, C08K 3/04, B60C 1/00

(54) **PNEUMATIC TIRE COMPRISING OUTER APEX**
LUFTREIFEN MIT ÄUSSERER SPITZE
PNEUMATIQUE COMPRENANT UNE APEX EXTERNE

(30) Priority: 05.06.2017 JP 2017110975
(43) Date of publication of application: 12.12.2018
(73) Proprietor: SUMITOMO RUBBER INDUSTRIES, LTD., Kobe-shi, Hyogo 651-0072 (JP)
(72) Inventor: HONDA, Shinichiro, Kobe-shi, Hyogo 651-0072 (JP)
(74) Representative: TBK

(56) References cited:
- EP-A1- 1 512 717
- EP-A1- 1 557 294
- EP-A1- 2 191 982
- DATABASE WPI Week 201107 Thomson Scientific, London, GB; AN 2011-A54569 XP002783563, -& JP 2011 001522 A (SUMITOMO RUBBER IND LTD) 6 January 2011 (2011-01-06)
- DATABASE WPI Week 201657 Thomson Scientific, London, GB; AN 2016-40314W XP002783564, -& CN 105 694 134 A (SHANDONG LINGLONG TIRE CO LTD) 22 June 2016 (2016-06-22)

## Description

### TECHNICAL FIELD

The present invention relates to a pneumatic tire including an outer apex.

### BACKGROUND ART

A structural technique for producing a pneumatic tire having both high durability and light weight is known in which a rubber apex component (outer apex) is disposed axially outward of the bead apex of a tire to reduce concentration of stress at the carcass (e.g., the second bead filler disclosed in WO 2012/018106 A). These days, however, further improvement in properties including durability is desired.

JP 2011 001522 A discloses a rubber composition for clinch apexes which can have a good balance of each performance of excellent durability (rubber strength), rolling resistance, and driving stability. The rubber composition for clinch apexes contains 4-55 pts.mass of a coal pitch-based carbon fiber based on 100 pts.mass of a rubber ingredient.

CN 105 694 134 A relates to a high-heat-conductivity tire bead filler composition, comprising the following components according to parts by weight: 100 parts of rubber main material, 70-100 parts of natural rubber, 10-30 parts of emulsion polymerized butadiene styrene rubber; a compounding agent according to 100 parts by weight of rubber main powder; the compounding agent includes according to weight parts, 1-20 parts of graphite powder, 60-90 parts of carbon black, 5-8 parts of phenolic reinforced resin, 2-5 parts of tackifying resin, 1-5 parts of zinc oxide, 1-3.5 parts of stearic acid, 3-8 parts of environment-friendly aromatic oil TDAE, 1-3 parts of sulfur powder, 0.5-3 parts of a promoter, and 1-3 parts of an aging resistant.

### SUMMARY OF INVENTION

### TECHNICAL PROBLEM

The present invention aims to solve the problem and provide a pneumatic tire that provides improved durability while maintaining or improving good handling stability.

### SOLUTION TO PROBLEM

The problem is solved by a pneumatic tire according to claim 1. Advantageous developments are subject-matter of the dependent claims.

The present invention relates to a pneumatic tire, including an outer apex formed from a rubber composition, the rubber composition having a thermal conductivity of 0.45 W/m·K or higher.

The rubber composition preferably contains, per 100 parts by mass of a rubber component therein, 3 to 55 parts by mass of a pitch-based carbon fiber.

The rubber composition preferably contains, per 100 parts by mass of a rubber component therein, 2 to 35 parts by mass of graphite.

The rubber composition preferably contains, per 100 parts by mass of a rubber component therein, 40 to 100 parts by mass of carbon black.

### ADVANTAGEOUS EFFECTS OF INVENTION

The present invention provides a pneumatic tire including an outer apex formed from a rubber composition, wherein the rubber composition has a thermal conductivity of 0.45 W/m·K or higher. Such a pneumatic tire provides improved durability while maintaining or improving good handling stability.

### BRIEF DESCRIPTION OF DRAWINGS

Fig. 1 illustrates an exemplary schematic cross-sectional view showing the sidewall portion and the bead portion of a pneumatic tire of the present invention.
Fig. 2 illustrates an exemplary schematic cross-sectional view showing the sidewall portion and the bead portion of a pneumatic tire of the present invention.
Fig. 3 illustrates an exemplary schematic cross-sectional view showing the sidewall portion and the bead portion of a pneumatic tire of the present invention.

### DESCRIPTION OF EMBODIMENTS

The pneumatic tire of the present invention includes an outer apex formed from a rubber composition having a thermal conductivity of 0.45 W/m·K or higher.

Exemplary embodiments of the pneumatic tire of the present invention will be described below with reference to drawings.

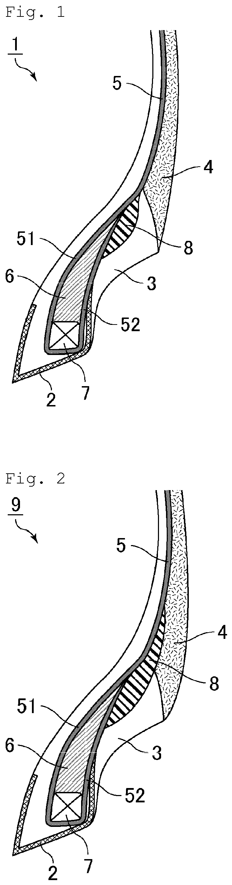

The structure of the pneumatic tire of the present invention may be as illustrated in, for example, the schematic cross-sectional views of Figs. 1 to 3 which show the sidewall portion and the bead portion.

Pneumatic tires 1, 9, and 10 each include: a tread rubber (not shown) forming a tread portion; a sidewall rubber 4 forming each of a pair of sidewall portions extending inwardly from each end of the tread rubber in the radial direction of the pneumatic tire 1, 9, or 10; a clinch rubber 3 forming a clinch portion located radially inward of each sidewall portion; and a chafer rubber 2 forming a chafer portion located on the top of a rim. Moreover, a carcass 5 is provided to extend between each of the bead portions including the clinch and chafer portions. The carcass 5 is composed of at least one carcass ply having carcass cords arranged therein. The carcass ply is provided extending from the tread portion via the sidewall portion and then turned up around a bead core 7 and a bead apex 6, which extends from the upper end of the bead core 7 toward the sidewall, from the inside to the outside in the axial direction of the pneumatic tire 1, 9, or 10, and finally anchored by the turn-up. The carcass 5 is divided by the turn-up into a main body 51 and a turn-up part 52.

In the pneumatic tire 1 in Fig. 1, an outer apex 8 is provided between the carcass turn-up part 52 and the clinch rubber 3.

In the pneumatic tire 9 in Fig. 2, an outer apex 8 is provided between the carcass turn-up part 52 and the clinch rubber 3 and, further, extending outwardly in the radial direction of the pneumatic tire 9 to be located between the carcass main body 51 and the sidewall rubber 4.

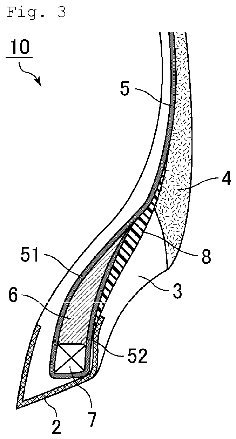

In the pneumatic tire 10 in Fig. 3, an outer apex 8 is provided between the carcass turn-up part 52 and the clinch rubber 3 and, further, extending outwardly in the radial direction of the pneumatic tire 10 to be located between the carcass main body 51 and the sidewall rubber 4. It also extends inwardly in the radial direction of the pneumatic tire to be located between the carcass turn-up part 52 and the chafer rubber 2.

The outer apex in the present invention refers to a tire component located axially outward of a bead apex of a tire as shown in the exemplary partial schematic cross-sectional views of tires in Figs. 1 to 3. Specifically, it is a tire component located axially outward of a carcass turn-up part of a tire. More specifically, it is a tire component located between a carcass turn-up part and an outer layer component (e.g. a sidewall rubber, a clinch rubber, a chafer rubber) located on the axially outer side of the sidewall portion or bead portion of a tire. Here, other tire components may be provided between the outer apex and the carcass turn-up part or the outer layer component. The outer apex may be an outermost layer located on the axially outer side of the sidewall portion or bead portion of a tire.

Herein, the term "clinch portion" refers to a tire component which is located in a region from the sidewall portion to the bead portion and covers an area that contacts a rim. The term "chafer portion" refers to a tire component located in at least a part of the bead portion which contacts a rim. Specific examples of these components are illustrated in, for example, Figs. 1 to 3 of the present application and Fig. 1 of JP 2010-163560 A, which is incorporated herein by reference.

As a result of intensive studies, the present inventors have found that the effect of an outer apex in improving properties including durability (e.g. chafer cracking resistance) cannot be sufficiently achieved because the presence of the outer apex results in an increased rubber gauge which makes it difficult to conduct necessary heat from the mold for cure adhesion of a carcass under normal vulcanization conditions, thereby failing to optimize the adhesion reaction. They have also found that even when vulcanization is performed for a long time so as to allow curing of a carcass to sufficiently proceed, the effect of improving properties including durability still cannot be sufficiently achieved as overcure of the rubber surface on the mold side occurs.

In view of these findings, the pneumatic tire of the present invention includes an outer apex formed from a rubber composition having a high thermal conductivity to compensate for the deterioration in heat conducting efficiency due to the increased rubber gauge, thereby providing improved durability while maintaining or improving good handling stability.

### <Rubber composition>

The rubber composition according to the present invention has a thermal conductivity of 0.45 W/m·K or higher. This provides improved durability while maintaining or improving good handling stability.

The thermal conductivity is preferably 0.6 W/m·K or higher, more preferably 0.8 W/m·K or higher, still more preferably 1 W/m·K or higher. A higher thermal conductivity is preferred, and there is no critical upper limit, but it may be, for example, 2 W/m·K or lower.

Herein, the thermal conductivity of the rubber composition is measured as described later in EXAMPLES.

The thermal conductivity may be controlled mainly by changing the type or amount of the filler used.

Non-limiting examples of rubbers that may be used in the rubber component of the rubber composition according to the present invention include diene rubbers such as isoprene-based rubbers, polybutadiene rubber (BR), styrene-butadiene rubber (SBR), styrene-isoprene-butadiene rubber (SIBR), chloroprene rubber (CR), acrylonitrile butadiene rubber (NBR), ethylene-propylene-diene rubber (EPDM), butyl rubber (IIR), and halogenated butyl rubber (X-IIR) . These rubbers may be used alone, or two or more of these may be used in combination. Among these, isoprene-based rubbers or SBR is preferred in order to better achieve the effects of the present invention.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubber (DPNR) and highly purified natural rubber (UPNR) . Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination.

The isoprene-based rubber content based on 100% by mass of the rubber component is preferably 20% by mass or more, more preferably 40% by mass or more, still more preferably 60% by mass or more. The content is also preferably 90% by mass or less, more preferably 80% by mass or less. When it is within the range indicated above, the effects of the present invention can be better achieved.

Non-limiting examples of the SBR include emulsion-polymerized styrene-butadiene rubber (E-SBR) and solution-polymerized styrene-butadiene rubber (S-SBR) . These rubbers may be used alone, or two or more of these may be used in combination.

The SBR content based on 100% by mass of the rubber component is preferably 10% by mass or more, more preferably 20% by mass or more. The content is also preferably 80% by mass or less, more preferably 60% by mass or less, still more preferably 40% by mass or less. When it is within the range indicated above, the effects of the present invention can be better achieved.

The rubber composition according to the present invention preferably contains a pitch-based carbon fiber and/or graphite as filler. This provides improved thermal conductivity to the rubber composition to improve durability while maintaining or improving good handling stability.

The pitch-based carbon fiber is preferably a coal pitch-based carbon fiber to better achieve the effects of the present invention.

The thermal conductivity (along the fiber axis) of the pitch-based carbon fiber is preferably 100 W/m·K or higher, more preferably 120 W/m·K or higher, still more preferably 130 W/m·K or higher, particularly preferably 135 W/m·K or higher. The upper limit of the thermal conductivity is not particularly critical, but is preferably 1,500 W/m·K or lower, more preferably 1, 000 W/m·K or lower, still more preferably 500 W/m·K or lower. When it is within the range indicated above, the effects of the present invention can be better achieved.

Herein, the thermal conductivity of the pitch-based carbon fiber is determined from electric resistivity using the following equation based on the very high correlation between thermal conductivity and electric resistivity of carbon fibers : K = 1272.4/ER - 49.4
wherein K represents the thermal conductivity (W/m·K) of the carbon fiber, and ER represents the electric resistivity (µΩm) of the carbon fiber.

The pitch-based carbon fiber preferably has an average fiber diameter of 1 to 80 µm in order to improve dispersion in rubber and thermal conductivity. The lower limit of the average fiber diameter is more preferably 3 µm or more, still more preferably 5 µm or more, while the upper limit of the average fiber diameter is more preferably 30 µm or less, still more preferably 20 µm or less.

The pitch-based carbon fiber also preferably has an average fiber length of 0.1 to 30 mm in order to improve dispersion in rubber and thermal conductivity. The lower limit of the average fiber length is more preferably 1 mm or more, still more preferably 4 mm or more, while the upper limit of the average fiber length is more preferably 15 mm or less, still more preferably 10 mm or less.

The average fiber diameter and average fiber length may be measured by, for example, electron microscopy.

The pitch-based carbon fiber in the present invention is not particularly limited. For example, it may suitably be a coal pitch-based carbon fiber produced as described in JP H7-331536 A, which is incorporated herein by reference. Specifically, the coal pitch-based carbon fiber may be produced by making a pitch fiber infusible in a conventional manner, carbonizing and/or graphitizing it at a desired temperature to obtain "a starting carbon fiber", and then putting the starting carbon fiber together with previously graphitized packing coke into a graphite crucible to perform graphitization.

Examples of the pitch fiber (spun pitch) used in the above method include those produced by spinning of carbonaceous materials such as coal tar, coal tar pitch, coal liquids, and other coal-derived materials (suitably those having an optically anisotropic content of 40% or more, preferably 70% or more, still more preferably 90% or more). Moreover, the "starting carbon fiber" may be impregnated with a sizing agent such as an epoxy compound or a water-soluble polyamide compound.

The above method can be used to produce a coal pitch-based carbon fiber that has a thermal conductivity along the fiber axis of 100 to 1,500 W/m·K, a tensile elastic modulus of 85 ton/mm² or more, a compressive strength of 35 kg/mm² or higher, a stacking thickness (Lc) of graphite crystals of 30 to 50 nm, a ratio of La (the dimension along the layer plane of graphite crystals) to Lc (La/Lc) of 1.5 or more, and a cross-sectional domain size along the fiber axis of 500 nm or smaller. Such a coal pitch-based carbon fiber can be suitably used in the present invention. The tensile elastic modulus, compressive strength, Lc, La, domain size, and optically anisotropic content can be determined as described in the above publication.

Since the coal pitch-based carbon fiber produced by the above method is formed from a liquid crystal (mesophase) or the like whose molecular orientation is limited to one direction, it has a very high degree of crystallinity and thus high elastic modulus and thermal conductivity.

The coal pitch-based carbon fiber in the present invention preferably has a structure in which polycyclic aromatic molecular frameworks are stacked in layers. Examples of commercial products of the coal pitch-based carbon fiber include "K6371T" available from Mitsubishi Plastics, Inc.

The amount of the pitch-based carbon fiber per 100 parts by mass of the rubber component is preferably 3 parts by mass or more, more preferably 16 parts by mass or more, still more preferably 30 parts by mass or more. When it is 3 parts by mass or more, the effects of the present invention can be better achieved. The amount is also preferably 55 parts by mass or less, more preferably 50 parts by mass or less. When it is 55 parts by mass or less, it is possible to reduce the problem of adhesion failure caused by the unvulcanized rubber composition having an excessively high viscosity which pushes away the carcass during vulcanization. This leads to better durability.

Herein, the term "graphite" refers to a native element mineral (crystal) consisting of carbon, which is also called plumbago or black lead, and encompasses not only naturally occurring graphite but also artificial graphite.

The graphite preferably has a particle size of 0.01 µm or more, more preferably 0.05 µm or more. The particle size is also preferably 10 µm or less, more preferably 5 µm or less. When it is within the range indicated above, the effects of the present invention can be better achieved.

Herein, the particle size of the graphite means the maximum particle size which is defined as the longest length of the graphite determined by transmission electron microscopy (TEM) in which the graphite is projected onto the projection plane while varying the orientation of the graphite with respect to the projection plane. For example, it is the length of the longer diagonal line of a rhombus or the diameter of a disc. The maximum particle size is measured using a transmission electron microscope (TEM).

The graphite preferably has a thickness of 3 nm or more, more preferably 5 nm or more. The thickness is also preferably 100 nm or less, more preferably 30 nm or less. When it is within the range indicated above, the effects of the present invention can be better achieved.

Herein, the thickness of the graphite is measured using a transmission electron microscope (TEM).

The graphite preferably has a nitrogen adsorption specific surface area (N₂SA) of 4 m²/g or more, more preferably 10 m²/g or more. The N₂SA is also preferably 50 m²/g or less, more preferably 20 m²/g or less. When it is within the range indicated above, the effects of the present invention can be better achieved.

Herein, the nitrogen adsorption specific surface area of the graphite is measured in accordance with JIS K 6217-2:2001.

The amount of graphite per 100 parts by mass of the rubber component is preferably 2 parts by mass or more, more preferably 5 parts by mass or more, still more preferably 10 parts by mass or more, particularly preferably 20 parts by mass or more. When it is 2 parts by mass or more, the effects of the present invention can be better achieved. The amount is also preferably 35 parts by mass or less, more preferably 30 parts by mass or less. When it is 35 parts by mass or less, it is possible to reduce the problem of adhesion failure caused by the unvulcanized rubber composition having an excessively high viscosity which pushes away the carcass during vulcanization. This leads to better durability.

The combined amount of the pitch-based carbon fiber and graphite per 100 parts by mass of the rubber component is preferably 2 parts by mass or more, more preferably 3 parts by mass or more. When it is 2 parts by mass or more, the effects of the present invention can be better achieved. The combined amount is also preferably 55 parts by mass or less, more preferably 50 parts by mass or less. When it is 55 parts by mass or less, it is possible to reduce the problem of adhesion failure caused by the unvulcanized rubber composition having an excessively high viscosity which pushes away the carcass during vulcanization. This leads to better durability.

The rubber composition according to the present invention preferably contains carbon black as filler in addition to the pitch-based carbon fiber and/or graphite. This provides synergistically improved thermal conductivity to the rubber composition to synergistically improve durability while maintaining or improving good handling stability. This effect is presumably because the combined use of a filler having a high aspect ratio such as a pitch-based carbon fiber or graphite with carbon black in aggregate form allows the filler to easily form a three-dimensional network structure, resulting in the formation of effective thermal conduction pathways.

Non-limiting examples of the carbon black include N134, N110, N220, N234, N219, N339, N330, N326, N351, N550, and N762. These materials may be used alone, or two or more of these may be used in combination.

The carbon black preferably has a nitrogen adsorption specific surface area (N₂SA) of 5 m²/g or more, more preferably 50 m²/g or more. A N₂SA of 5 m²/g or more tends to lead to improved reinforcing properties and therefore sufficient durability and handling stability. The N₂SA is also preferably 200 m²/g or less, more preferably 150 m²/g or less, still more preferably 100 m²/g or less. Carbon black having a N₂SA of 200 m²/g or less tends to disperse well, thereby resulting in good durability and good handling stability.

The nitrogen adsorption specific surface area of the carbon black is determined in accordance with JIS K6217-2:2001.

The carbon black preferably has a dibutyl phthalate oil absorption (DBP) of 5 mL/100 g or more, more preferably 50 mL/100 g or more. A DBP of 5 mL/100 g or more tends to lead to improved reinforcing properties and therefore sufficient durability and handling stability. The DBP is also preferably 200 mL/100 g or less, more preferably 150 mL/100 g or less. A DBP of 200 mL/100 g or less tends to lead to good durability and good handling stability.

The DBP of the carbon black can be determined in accordance with JIS K6217-4:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of carbon black per 100 parts by mass of the rubber component is preferably 40 parts by mass or more, more preferably 60 parts by mass or more. An amount of 40 parts by mass or more can provide sufficient reinforcing properties and therefore better durability and handling stability. The amount is also preferably 100 parts by mass or less, more preferably 80 parts by mass or less. An amount of not more than 100 parts by mass can lead to better durability.

The combined amount of the pitch-based carbon fiber, graphite, and carbon black per 100 parts by mass of the rubber component is preferably 40 parts by mass or more, more preferably 60 parts by mass or more, still more preferably 80 parts by mass or more, particularly preferably 100 parts by mass or more. The combined amount is also preferably 150 parts by mass or less, more preferably 130 parts by mass or less. When it is within the range indicated above, the effects of the present invention can be better achieved.

The rubber composition according to the present invention preferably contains a resin. This further improves durability and handling stability.

Examples of the resin include phenol-based resins and cresol-based resins, with phenol-based resins being preferred. Examples of the phenol-based resins include phenol resins produced by reacting phenols with aldehydes such as formaldehyde, acetaldehyde, or furfural, and modified phenol resins obtained by modification with cashew oil, tall oil, linseed oil, various animal and vegetable oils, unsaturated fatty acids, rosin, alkylbenzene resins, aniline, melamine, or other modifiers. Among these, modified phenol resins are preferred, with cashew oil-modified phenol resins being more preferred, because they improve durability and handling stability.

The cashew oil-modified phenol resin may suitably be a resin represented by the following formula (1): 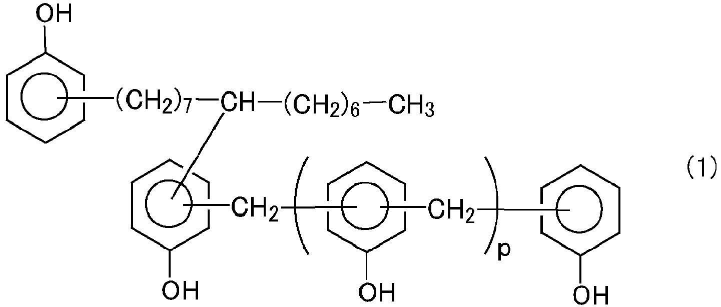 wherein p is an integer of 1 to 9, preferably 5 or 6, to provide good reactivity and improved dispersibility.

The resin preferably has a softening point of 50°C or higher, more preferably 80°C or higher, but preferably 150°C or lower, more preferably 120°C or lower. A softening point falling within the range indicated above can further improve handling stability and durability.

Herein, the softening point is determined as set forth in JIS K 6220:2001 using a ring and ball softening point measuring apparatus and defined as the temperature at which the ball drops down.

The amount of the resin per 100 parts by mass of the rubber component is preferably 1 part by mass or more, more preferably 3 parts by mass or more. The amount is also preferably 30 parts by mass or less, more preferably 15 parts by mass or less, still more preferably 10 parts by mass or less. An amount of 1 part by mass or more tends to provide good durability and good handling stability. An amount of not more than 30 parts by mass tends to lead to good fuel economy.

In the case where the rubber composition according to the present invention contains a phenol-based resin, it preferably further contains a curing agent which has a curing effect on the phenol-based resin. In this case, the effects of the present invention can be better achieved. Any curing agent having the curing effect may be used. Examples include hexamethylenetetramine (HMT), hexamethoxymethylol melamine (HMMM), hexamethoxymethylol pentamethyl ether (HMMPME), melamine, and methylol melamine. Among these, HMT, HMMM, and HMMPME are preferred because they have an excellent effect in increasing the hardness of phenol-based resins.

The amount of the curing agent per 100 parts by mass of the phenol-based resin is preferably 0.1 parts by mass or more, more preferably 0.3 parts by mass or more. An amount of 0.1 parts by mass or more tends to provide sufficient curing. The amount is preferably 10 parts by mass or less, more preferably 3 parts by mass or less. An amount of not more than 10 parts by mass tends to provide uniform curing and prevent scorching during extrusion.

The rubber composition according to the present invention preferably contains an oil.

The oil may be, for example, a process oil, vegetable fat or oil, or a mixture thereof. Examples of the process oil include paraffinic process oils, aromatic process oils, and naphthenic process oils. Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination. Among these, process oils, preferably aromatic process oils, are preferred in order to well achieve the effects of the present invention.

The amount of the oil per 100 parts by mass of the rubber component is preferably 5 parts by mass or more, more preferably 10 parts by mass or more. The amount is also preferably 30 parts by mass or less, more preferably 20 parts by mass or less. When it is within the range indicated above, the effects of the present invention tend to be well achieved.

The rubber composition according to the present invention preferably contains zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of zinc oxide per 100 parts by mass of the rubber component is preferably 0.5 parts by mass or more, more preferably 1 part by mass or more. The amount is also preferably 10 parts by mass or less, more preferably 5 parts by mass or less. When it is within the range indicated above, the effects of the present invention tend to be better achieved.

The rubber composition according to the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of stearic acid per 100 parts by mass of the rubber component is preferably 0.5 parts by mass or more, more preferably 1 part by mass or more. The amount is also preferably 10 parts by mass or less, more preferably 5 parts by mass or less. When it is within the range indicated above, the effects of the present invention tend to be well achieved.

The rubber composition according to the present invention preferably contains sulfur.

Examples of the sulfur include those commonly used in the rubber industry, such as sulfur powder, precipitated sulfur, colloidal sulfur, insoluble sulfur, highly dispersible sulfur, and soluble sulfur. These materials may be used alone, or two or more of these may be used in combination.

The sulfur may be a product of, for example, Tsurumi Chemical Industry Co., Ltd., Karuizawa sulfur Ltd., Shikoku Chemicals Corporation, Flexsys, Nippon Kanryu Industry Co., Ltd., or Hosoi Chemical Industry Co., Ltd.

The amount of sulfur per 100 parts by mass of the rubber component is preferably 0.5 parts by mass or more, more preferably 1 part by mass or more. The amount is also preferably 10 parts by mass or less, more preferably 5 parts by mass or less, still more preferably 3 parts by mass or less. When it is within the range indicated above, the effects of the present invention tend to be well achieved.

The rubber composition according to the present invention preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazolylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These materials may be used alone, or two or more of these may be used in combination. Among these, sulfenamide vulcanization accelerators are preferred in order to more suitably achieve the effects of the present invention.

The amount of the vulcanization accelerator per 100 parts by mass of the rubber component is preferably 1 part by mass or more. The amount is also preferably 10 parts by mass or less, more preferably 7 parts by mass or less. When it is within the range indicated above, the effects of the present invention tend to be better achieved.

In addition to the above components, the rubber composition according to the present invention may contain additives commonly used in the tire industry. Examples include organic peroxides; additional fillers such as calcium carbonate, talc, alumina, clay, aluminum hydroxide, and mica; and processing aids such as plasticizers and lubricants.

The rubber composition according to the present invention may be prepared, for example, by kneading the components in a rubber kneading machine such as an open roll mill or Banbury mixer, and vulcanizing the kneaded mixture.

### (Pneumatic tire)

The pneumatic tire of the present invention may be formed from the rubber composition according to the present invention by common methods. Specifically, the unvulcanized rubber composition containing the components is extruded into the shape of an outer apex, assembled with other tire components on a tire building machine in a usual manner to build an unvulcanized tire, which is then heated and pressurized in a vulcanizer to produce a tire.

The pneumatic tire of the present invention can be suitably used as a tire for passenger vehicles, large passenger vehicles, large SUVs, heavy-load vehicles such as trucks and buses, or light trucks.

### EXAMPLES

The present invention will be specifically described with reference to examples, but is not limited thereto.

The chemicals used in the examples and comparative examples are listed below.
NR: TSR20
SBR: Nipol 1502 available from Zeon Corporation
Carbon black: N330 (N₂SA: 75m²/g, DBP: 102 mL/100 g) available from Cabot Japan K.K.
Pitch-based carbon fiber: coal pitch-based carbon fiber "K6371T" (chopped fiber, average fiber diameter: 11 µm, average fiber length: 6.3 mm, thermal conductivity: 140 W/m·K) available from Mitsubishi Plastics, Inc.
Graphite: thin layer graphite (particle size: 0.1 to 1 µm, thickness: 10 to 20 nm, carbon content: 97% or more, specific surface area: 15 m²/g or more)
Resin: PR12686 (cashew oil-modified phenol resin represented by formula (1), softening point: 100°C) available from Sumitomo Bakelite Co., Ltd.
Stearic acid: stearic acid "TSUBAKI" available from NOF Corporation
Zinc oxide: zinc oxide #1 available from Mitsui Mining & Smelting Co., Ltd.
Oil: Diana Process AH-24 (aromatic process oil) available from Idemitsu Kosan Co., Ltd.
Sulfur: M95 (insoluble sulfur) available from Nippon Kanryu Industry Co., Ltd.
Curing agent: NOCCELER H (hexamethylenetetramine) available from Ouchi Shinko Chemical Industrial Co., Ltd.
Vulcanization accelerator: NOCCELER NS (N-t-butyl-2-benzothiazolylsulfenamide) available from Ouchi Shinko Chemical Industrial Co., Ltd.

### (Examples and Comparative Examples)

The materials other than the sulfur and vulcanization accelerator in the amounts indicated in Table 1 were kneaded using a Banbury mixer (Kobe Steel, Ltd.) at 150°C for five minutes to provide a kneaded mixture. Then, the sulfur and vulcanization accelerator were added to the kneaded mixture, and they were kneaded using an open roll mill at 80°C for five minutes to obtain an unvulcanized rubber composition.

The unvulcanized rubber composition was press-vulcanized at 170°C for 10 minutes to obtain a vulcanized rubber composition.

Separately, the unvulcanized rubber composition was formed into an outer apex shape and assembled with other tire components to build an unvulcanized tire, which was then press-vulcanized at 170°C for 10 minutes to prepare a test tire (size: 205/85R16, 117/115L) having a structure as illustrated in Fig. 1.

The vulcanized rubber compositions and test tires prepared as above were evaluated as follows. Table 1 shows the results.

### <Thermal conductivity>

The thermal conductivity (W/m·K) of a test piece (length 100 mm × width 50 mm × thickness 10 mm, a homogeneous sample with a smooth measurement surface) of the vulcanized rubber composition was measured in accordance with JIS R 2616 using a thermal conductivity meter (QTM-500 available from Kyoto Electronics Manufacturing Co., Ltd.) at a measurement temperature of 25°C for a measurement duration of 60 seconds.

### <Durability>

The test tire mounted on a 5.5J rim was run at 80 km/h under test conditions including an air pressure of 600 kPa and a load of 16.79 kN. The running distance at which damage to the bead portion occurred was measured and expressed as an index (durability index), with Comparative Example 1 set equal to 100. A higher index indicates better durability.

### <Handling stability>

Each set of test tires was mounted on a car, and a test driver drove the car. The test driver subjectively evaluated handling stability during the driving. The results are expressed as an index (handling stability index), with Comparative Example 1 set equal to 100. A higher index indicates better handling stability.

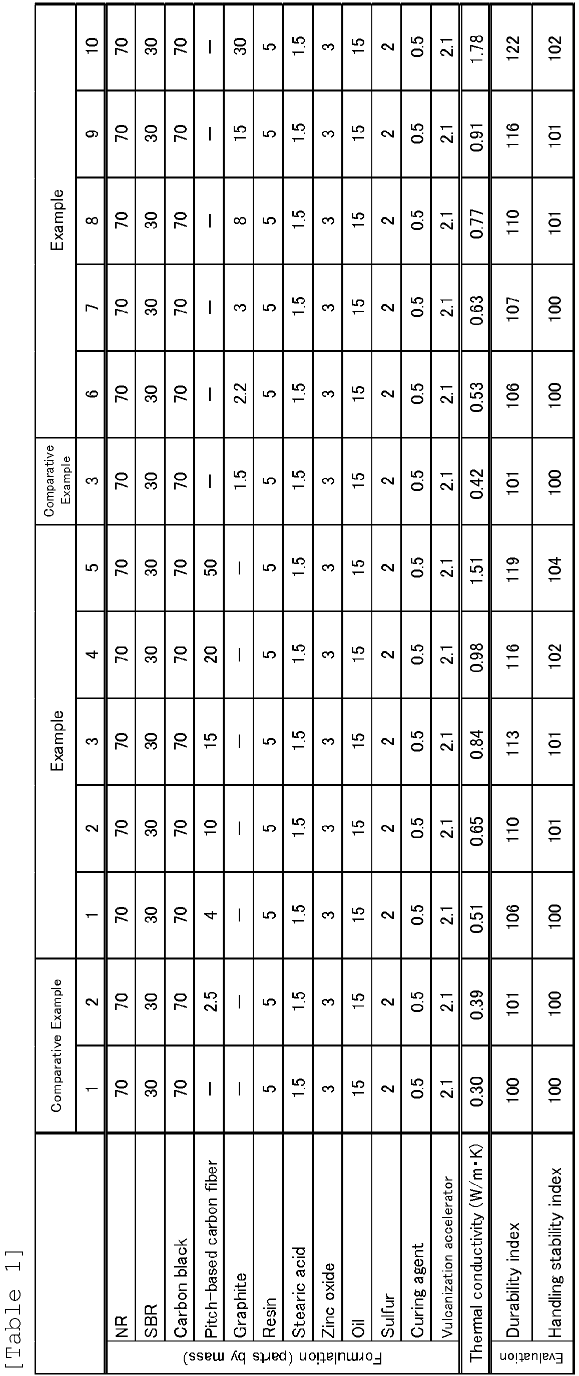

The results in Table 1 show that the examples including an outer apex formed from a rubber composition with a thermal conductivity of 0.45 W/m·K or higher achieved improved durability while maintaining or improving good handling stability.

The present invention provides a pneumatic tire that provides improved durability while maintaining or improving good handling stability. The present invention relates to a pneumatic tire including an outer apex formed from a rubber composition, the rubber composition having a thermal conductivity of 0.45 W/m·K or higher.

### REFERENCE SIGNS LIST

- 1: pneumatic tire
- 2: chafer rubber
- 3: clinch rubber
- 4: sidewall rubber
- 5: carcass
- 51: carcass main body
- 52: carcass turn-up part
- 6: bead apex
- 7: bead core
- 8: outer apex
- 9: pneumatic tire
- 10: pneumatic tire

## Claims

1. A pneumatic tire (1; 9; 10), comprising an outer apex (8) which is located axially outward of a bead apex (6) and which is formed from a rubber composition, the rubber composition having a thermal conductivity of 0.45 W/m·K or higher.

2. The pneumatic tire (1; 9; 10) according to claim 1,
wherein the rubber composition comprises, per 100 parts by mass of a rubber component therein, 3 to 55 parts by mass of a pitch-based carbon fiber.

3. The pneumatic tire (1; 9; 10) according to claim 1 or 2,
wherein the rubber composition comprises, per 100 parts by mass of a rubber component therein, 2 to 35 parts by mass of graphite wherein graphite refers to the native element mineral consisting of carbon.

4. The pneumatic tire (1; 9; 10) according to any one of claims 1 to 3,
wherein the rubber composition comprises, per 100 parts by mass of a rubber component therein, 40 to 100 parts by mass of carbon black.

5. The pneumatic tire (9; 10) according to any one of claims 1 to 4,
wherein the outer apex (8) is provided between the carcass turn-up part (52) and the clinch rubber (3).

6. The pneumatic tire (9; 10) according to claim 5,
wherein the outer apex (8) extends outwardly in the radial direction of the pneumatic tire (9; 10) to be located between a carcass main body (51) and a sidewall rubber (4).

## Patentansprüche

1. Luftreifen (1; 9; 10), der eine äußere Spitze (8) umfasst, die axial auswärts von einer Wulstspitze (6) angeordnet ist und die aus einer Gummizusammensetzung gebildet ist, wobei die Gummizusammensetzung eine Wärmeleitfähigkeit von 0,45 W/m·K oder höher aufweist.

2. Der Luftreifen (1; 9; 10) nach Anspruch 1,
wobei die Gummizusammensetzung pro 100 Massenteile einer Gummikomponente darin 3 bis 55 Massenteile einer Kohlenstofffaser auf Pechbasis aufweist.

3. Luftreifen (1; 9; 10) nach Anspruch 1 oder 2,
wobei die Gummizusammensetzung pro 100 Massenteile einer Gummikomponente darin 2 bis 35 Massenteile Graphit umfasst, wobei sich Graphit auf das native Elementmineral bezieht, das aus Kohlenstoff besteht.

4. Luftreifen (1; 9; 10) nach einem der Ansprüche 1 bis 3,
wobei die Gummizusammensetzung pro 100 Massenteile einer Gummikomponente darin 40 bis 100 Massenteile Ruß aufweist.

5. Luftreifen (9; 10) nach einem der Ansprüche 1 bis 4,
wobei die äußere Spitze (8) zwischen dem Karkassenumschlagteil (52) und dem Clinchgummi (3) vorgesehen ist.

6. Luftreifen (9; 10) nach Anspruch 5,
wobei sich die äußere Spitze (8) in radialer Richtung des Luftreifens (9; 10) auswärts erstreckt, um zwischen einem Karkassenhauptkörper (51) und einem Seitenwandgummi (4) angeordnet zu sein.

## Revendications

1. Pneu (1 ; 9 ; 10) comprenant un apex extérieur (8) qui est situé axialement vers l'extérieur d'un apex de talon (6), et qui est formé à partir d'une composition de caoutchouc, la composition de caoutchouc ayant une conductivité thermique de 0,45 W/m•K ou plus.

2. Pneu (1 ; 9 ; 10) selon la revendication 1, dans lequel la composition de caoutchouc comprend, pour 100 parties en masse d'un composant caoutchouc dans celle-ci, 3 à 55 parties en masse de fibres de carbone à base de brai.

3. Pneu (1 ; 9 ; 10) selon la revendication 1 ou 2, dans lequel la composition de caoutchouc comprend, pour 100 parties en masse d'un composant caoutchouc dans celle-ci, 2 à 35 parties en masse de graphite, et dans lequel le graphite se réfère à un minéral élémentaire natif constitué de carbone.

4. Pneu (1 ; 9 ; 10) selon l'une quelconque des revendications 1 à 3, dans lequel la composition de caoutchouc comprend, pour 100 parties en masse d'un composant caoutchouc dans celle-ci, 40 à 100 parties en masse de noir de carbone.

5. Pneu (9 ; 10) selon l'une quelconque des revendications 1 à 4, dans lequel l'apex extérieur (8) est disposé entre la partie de revers de carcasse (52) et le caoutchouc de coussin de jante (3).

6. Pneu (9 ; 10) selon la revendication 5, dans lequel l'apex extérieur (8) s'étend vers l'extérieur dans la direction radiale du pneu (9, 10) de façon à être situé entre un corps principal de carcasse (51) et un caoutchouc de flanc (4) .
